# EUROPEAN PATENT SPECIFICATION

(11) **EP 1 761 229 B1**
(45) Date of publication and mention of the grant of the patent: **05.10.2011**
(21) Application number: 05764214.2
(22) Date of filing: 28.06.2005
(51) Int. Cl.: A61F 13/56, B32B 5/04, B32B 27/12, B32B 25/04

(54) **NONWOVEN-ELASTOMERIC LAMINATE WITH IMPROVED BONDING BETWEEN ELASTOMER AND NONWOVEN WEB**
VLIES-ELASTOMERLAMINAT MIT VERBESSERTER BINDUNG ZWISCHEN ELASTOMER UND VLIESSTOFF
STRATIFIÉ ÉLASTOMÈRE NON TISSÉ AVEC UNE LIAISON AMÉLIORÉE ENTRE L'ÉLASTOMÈRE ET LE VOILE NON TISSÉ

(30) Priority: 29.06.2004 US 583947 P
(43) Date of publication of application: 14.03.2007
(73) Proprietor: Avery Dennison Corporation, Pasadena, CA 91103 (US)
(72) Inventor: FOUSE, Willie, Hermosa Beach, CA 90254 (US); HUANG, Zhisong, San Dimas, CA 91773 (US); VANMARCKE, Ben, Pasadena, CA 91101 (US)
(74) Representative: Müller-Boré & Partner Patentanwälte
(86) International application number: PCT/US2005/022685
(87) International publication number: WO 2006/004637

(56) References cited:
- WO-A-01/54900
- US-A- 5 422 172
- US-A- 5 514 470

## Description

### TECHNICAL FIELD

The present invention relates to an extrusion bonded laminate including an elastomeric film bonded to at least one nonwoven web layer. Such laminate may have the elastomeric film extruded directly onto the at least one nonwoven web layer.

### BACKGROUND

Elastic films for nonwoven laminates have been produced via conventional extrusion using materials such as block copolymers. Such block copolymers provide good elastic properties at relatively low cost. However, the processing of these materials may be complicated when the elastomeric film is extruded directly onto the nonwoven layer. Due to the nature of the block copolymer, two major problems can occur: poor rheology, resulting in poor melt strength; and poor bonding to the nonwoven layer. These problems have been addressed in the prior art by adding adhesive layers and/or by adding tackifiers to the elastomer of which the elastomeric film is formed.

It would be advantageous to provide such laminates that have good rheology and good bonding of the elastomeric film to the nonwoven layer without the necessity of either providing adhesive layers between the elastomeric film and the nonwoven layer or adding tackifier to the elastomer.

### SUMMARY

In one embodiment, the present invention relates to an extrusion bonded laminate including an elastomeric film directly bonded to at least one nonwoven web layer substantially continuously over at least a major portion of the laminate,
wherein the laminate is extensible in at least one direction, has an elongation at break of 250% does not delaminate prior to break and
wherein the elastomeric film comprises an SEBS block copolymer, and wherein the elastomeric film is substantially free of a tackifying amount of a tackifier and wherein the total vinyl arene content of the elastomeric film is 30% or less. In one embodiment, the elastomeric film further comprises an additive including one or more of polystyrene, poly-(α-methyl)styrene, an ethylene-vinylacetate copolymer, an ethylene-methyl(meth)acrylate copolymer, an ethylene-ethyl(meth)acrylate copolymer, an ethylene-(meth)acrylic acid copolymer. In one embodiment, the elastomeric film further comprises a process oil.

In another embodiment, the present invention relates to a diaper closure including:
an extrusion bonded laminate defined here above.

In another embodiment, the present invention relates to a process for producing an extrusion-bonded laminate as defined here above and extensible in at least one direction, including:
forming a laminate by extrusion bonding an extruded elastomeric film directly to at least one nonwoven web,
wherein the elastomeric film is directly bonded to the nonwoven webs substantially continuously over at least a major portion of the laminate, and
wherein the elastomeric film comprises an SEBS block copolymer, and wherein the elastomeric film is substantially free of a tackifying amount of a tackifier and wherein the total vinyl arene content of the elastomeric film is about 30% or less. In one embodiment, the process further includes adding to the mixture an additive including one or more of polystyrene, poly-(α-methyl)styrene, an ethylene-vinylacetate copolymer, an ethylene-methyl(meth)acrylate copolymer, an ethylene-ethyl(meth)acrylate copolymer, an ethylene-(meth)acrylic acid copolymer. In one embodiment, the step of forming the laminate by extrusion bonding an extruded elastomeric film directly to at least one nonwoven web is carried out in a single step. In one embodiment, the elastomeric film further comprises a process oil.

In one embodiment, the present invention provides laminates that have good rheology and good bonding of the elastomeric film to the nonwoven layer without the necessity of either providing adhesive layers between the elastomeric film and the nonwoven layer or adding tackifier to the elastomer. In one embodiment, the present invention provides laminates that have high elongation at break, and which do not delaminate prior to break.

### BRIEF DESCRIPTION OF THE DRAWINGS

Fig. 1 is a schematic illustration of an apparatus for carrying out a process for forming an extrusion bonded laminate in accordance with one embodiment of the present invention.
Fig. 2 is a schematic cross-sectional view of an extrusion-bonded laminate in accordance with an embodiment of the present invention.
Fig. 3 is a schematic cross-sectional view of an extrusion-bonded laminate in accordance with an embodiment of the present invention similar to that of Fig. 2, but including a plurality of layers in the elastomeric film.
Fig. 4 is a schematic illustration of an apparatus for carrying out a process for forming an extrusion bonded laminate, similar to that of Fig. 1, in accordance with another embodiment of the present invention.
Fig. 5 is a cross-sectional view of a pair of rollers shown in Fig. 6, taken at line 5-5 of Fig. 4.
Fig. 6 is a schematic perspective view of a construction such as a diaper closure, including a laminate, in accordance with another embodiment of the present invention.
Fig. 7 is a schematic depiction of a process of making a diaper tab, in accordance with embodiments of the invention.
Figs 8-15 are stress/strain graphs for samples of various embodiments of the present invention.

It should be appreciated that for simplicity and clarity of illustration, elements shown in the Figures have not necessarily been drawn to scale. For example, the dimensions of some of the elements may be exaggerated relative to each other for clarity. Further, where considered appropriate, reference numerals have been repeated among the Figures to indicate corresponding elements.

### DETAILED DESCRIPTION

It should be appreciated that the process steps and structures described below may not form a complete process flow for manufacturing an extrusion bonded laminate product. The present invention can be practiced in conjunction with elastomer, nonwoven material and laminate fabrication techniques currently used in the art, and only so much of the commonly practiced process steps are included as are necessary for an understanding of the present invention.

In one embodiment, the present invention relates to an extrusion bonded laminate including an elastomeric film directly bonded to at least one nonwoven web layer substantially continuously over at least a major portion of the laminate, in which the laminate is extensible in at least one direction has an elongation at break of 250% or greater and does not delaminate prior to break, and the elastomeric film includes an SEBS block copolymer, and the elastomeric film is substantially free of a tackifying amount of a tackifier. The total vinyl arene content of the elastomeric film is 30% or less.

As used herein, the term "tackifier" means any of the compositions or materials known in the art which are useful to impart tack to compositions such as adhesives. ASTM D-1878-61T defines tack as "the property of a material which enables it to form a bond of measurable strength immediately on contact with another surface". Tackifiers include, for example, rosin acid derivatives, tackifiers based on terpenes such as α- or β-pinene, petroleum-based tackifiers such as C-5 or C-9 resins, and other tackifiers such as t-butyl phenolic resins.

As used herein, the term "substantially free of a tackifying amount of a tackifier" means that the composition so described is free of a material which, if present in sufficient quantity, would act as a tackifier in the composition. As is known in the art, when a tackifier is added to a composition, a sufficient quantity of the tackifier must be added to provide tack to the composition if it is to act as a tackifier in the composition; such quantity is "a tackifying amount". Thus, in one embodiment, a tackifying amount of tackifier is greater than about 5% by weight of the composition to which the tackifier is added, and for such composition to be substantially free of a tackifying amount of tackifier means that less 5% by weight of the composition is tackifier. In another embodiment, a tackifying amount is greater than 2% by weight, and for such composition to be substantially free of tackifying amount of tackifier, less than 2% by weight of the composition is tackifier. In another embodiment, the relevant amount of tackifier is 1% by weight. In yet another embodiment, the relevant amount of tackifier is 10% by weight. Thus, according to one embodiment of the present invention, the elastomeric film is substantially free of tackifying amount of tackifier when less than the relevant amount of tackifier Is present, and any material which would otherwise act as a tackifier is present in amounts insufficient to provide or impart tack to the composition.

As used herein, the terms "elastic," "elasticized" and "elasticity" mean that property of a material or composite by virtue of which it tends to recover to or near its original size and shape after removal of a force causing a deformation.

As used herein, the term "elastomeric" refers to a material or composite which can be elongated by at least 50 percent of its relaxed length and which will recover, upon release of the applied force, at least 40 percent of its elongation. In one embodiment, the elastomeric material or composite is capable of being elongated by at least 100 percent, an in one embodiment by at least 300 percent, of its relaxed length and recover, upon release of an applied force, at least 50 percent of its elongation. In one embodiment, the elastomeric material or composite is capable of being elongated by at least 100 percent, an in one embodiment by at least 300 percent, of its relaxed length and can recover, upon release of an applied force, at least 25 percent of its elongation.

As used herein, the term "layer" when used in the singular can have the dual meaning of a single element or a plurality of elements, such as, for example, two or more coextruded films forming a single layer.

As used herein, the terms "stretchable" and "extensible" mean that a material can be stretched, without breaking, by at least 50% to at least 150% of its initial (unstretched) length in at least one direction, in one embodiment by at least 100% to at least 200% of its initial length, and in another embodiment by at least 150% to at least 250% of its initial length. The terms "stretchable" and "extensible" include elastic materials as well as materials that stretch but do not retract to the degree defined above for elastic materials, and include materials that stretch but do not significantly retract.

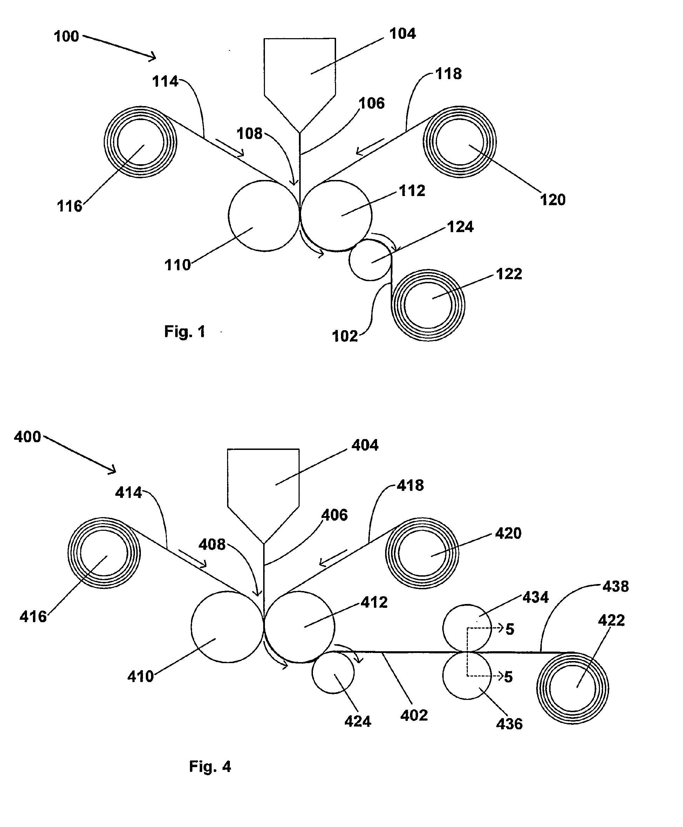

Referring to Fig. 1 of the drawings, there is schematically illustrated an apparatus 100 for carrying out a process for forming an extrusion bonded laminate 102 including an elastomeric film directly bonded to at least one nonwoven web layer, in accordance with one embodiment of the present invention. As shown in Fig. 1, an extrusion apparatus 104 extrudes an elastomeric extrudate 106 which is fed into a nip 108 formed between two calender rollers 110 and 112. In one embodiment, the extrusion apparatus 104 extrudes a single layer of extrudate, and in other embodiments, the extrusion apparatus 104 is adapted to extrude or coextrude a plurality of layers of extrudate, as described more fully below. In one embodiment, one calender roller 110 or 112 may be a generally smooth calender roll, made of, e.g., stainless steel, and another of the calender rollers may be a smooth roller made of, e.g., rubber. In one embodiment, one or both of the rollers may be cooled. In other embodiments, other rollers in the apparatus are cooled.

In one embodiment, the elastomeric extrudate 106 is extruded in continuous sheet form, in which the sheet has a substantially uniform thickness. In another embodiment, the elastomeric extrudate is extruded in continuous sheet form, in which the sheet has areas of non-uniform thickness, for example, having striations or lines formed by relatively thicker portions separated by relatively thinner portions in the continuous sheet. In one embodiment, the elastomeric extrudate is not extruded in strand or ribbon form, in which the strands or ribbons are discrete from one another.

In one embodiment, a first nonwoven web 114 is provided to the nip 108 from a feed roll 116, and a second nonwoven web 118 is provided to the nip 108 from a second feed roll 120.

In one embodiment, only a single nonwoven web is provided to the nip 108. In this embodiment, one side of the laminate comprises an exposed elastomeric film. In such embodiment, the exposed elastomeric extrudate may be exposed to a metal roller rather than to a rubber roller.

In one embodiment, the elastomeric extrudate 106, the first nonwoven web 114 and the second nonwoven web 118 are fed together to the nip 108 to thereby form the extrusion bonded laminate 102, which may be taken up on a take-up roll 122. In one embodiment, tension is provided on the nonwoven webs 114, 118 by the take-up roll 122 and an idler roll 124. As described below, in some embodiments, the elastomeric layer 106 may comprise a plurality of layers, or may be a single layer. In embodiments in which the elastomeric layer 106 comprises a plurality of layers, in each such embodiment, the elastomeric film is directly applied to the nonwoven layer.

The pressure between the rollers 110, 112 at the nip 108 is in the range from 0.25 to 5 bar, and in another embodiment, from 1 to 3 bar, and in another embodiment, from 0.5 to 1 bar. In general, lower pressures are preferred over higher pressures, with the proviso that the applied pressure should be adequate to obtain a good bond between the elastomeric extrudate and the nonwoven web to which it is bonded. In one embodiment, the pressure depends on the particular equipment used for the lamination. Some equipment inherently requires higher applied pressure than does other equipment. The present inventors have discovered that if too high a pressure is applied in laminating the elastomeric material to the nonwoven layer(s), the elastomeric material becomes deeply embedded in the web, and the resulting laminate acts more like a fiber-reinforced composite, being more brittle than elastic. When such a laminate undergoes stress/strain testing as described herein, a low elongation at break and high stress values are obtained. In one embodiment, when the appropriate pressure is applied, a good bond is obtained but the layers remain substantially distinct.

The gap between the rollers 110, 112 in the nip 108 is in the range from zero microns to 1000 microns, and in another embodiment from zero to 700 microns, and in another embodiment, up to 500 microns.

Thus, in one embodiment, the present invention relates to a process for producing an extrusion-bonded laminate extensible in at least one direction, including forming a laminate by extrusion bonding an elastomeric film directly to at least one nonwoven web, in which the elastomeric film is directly bonded to the nonwoven webs substantially continuously over at least a major portion of the laminate, and in which the elastomeric film includes a vinyl arene-containing block copolymer, in which the elastomeric film is substantially free of a tackifying amount of a tackifier. As noted above, in one embodiment, the total vinyl arene content of the elastomeric film is about 30% or less. In one embodiment, the step of forming is carried out in a single step. As noted, in one embodiment, only a single nonwoven web is used, and in another embodiment, a pair of nonwoven webs are used. The apparatus shown in Fig. 1 is suitable for carrying out this process.

In one embodiment, the method of the present invention is carried out on high-speed production machinery on the order of 100-500 fpm (0.5 to 2.5 m/s). In this embodiment, a nonwoven web is introduced into a nip of a pair of rollers for extrusion lamination with the elastomeric film or extrudate. The elastomeric film is extruded into the nip at a temperature above its softening point to form an elastomeric film laminated to the nonwoven web. In one embodiment, the temperature of the extrudate is above its softening point at the time it contacts the nonwoven web in the nip. As noted above, the compressive force between the nonwoven web and the elastomeric film is controlled to bond one surface of the nonwoven web to the elastomeric film to form a laminate. The compressive force may be controlled by adjusting the pressure between the rollers, as described above, or by setting a gap between the nip rolls.

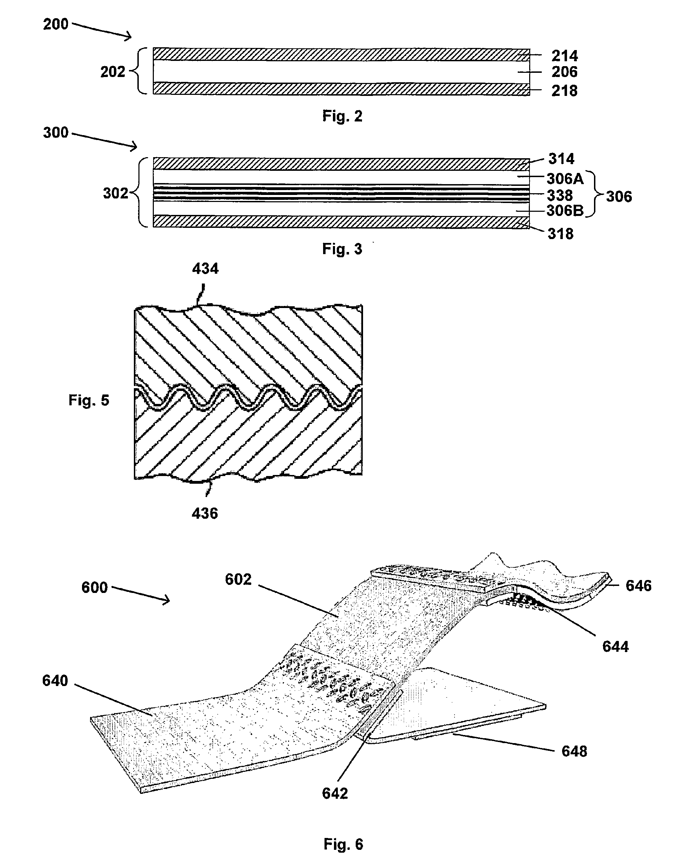

Fig. 2 is a schematic cross-sectional view of a construction 200 including an extrusion-bonded laminate 202 in accordance with an embodiment of the present invention. As illustrated in Fig. 2, the extrusion-bonded laminate 202 includes an elastomeric layer 206 sandwiched between a first nonwoven web layer 214 and a second non-woven web layer 218. As shown in Fig. 2, these three layers form the laminate 202. As described below, in some embodiments, the elastomeric layer 206 may comprise a plurality of layers, or may be a single layer. In embodiments in which the elastomeric layer 206 comprises a plurality of layers, in each such embodiment, the elastomeric film is directly applied to the nonwoven layer.

Fig. 3 is a schematic cross-sectional view of a construction 300 including an extrusion-bonded laminate 302 in accordance with another embodiment of the present invention similar to that of Fig. 2, but including a plurality of layers in the elastomeric film 306. As shown in Fig. 3, in this embodiment, the elastomeric film 306 comprises a plurality of layers, in this example, three layers. In other embodiments, additional layers may be included, as long as the elastomeric film of the present invention is directly bonded to the nonwoven web layers. In the embodiment illustrated in Fig. 3, the elastomeric film 306 includes an upper elastomeric film 306A and a lower elastomeric film 306B, which layers have sandwiched between them an intermediate layer 338. The intermediate layer 338 may comprise any material, but is most often an elastomeric material. The elastomeric material of the intermediate layer 338 may comprise any of the materials disclosed above for use as the elastomeric layer, but may also include any other elastomeric or stretchable material known in the art and compatible with the elastomeric film 306A and 306B. Exemplary suitable materials are disclosed below. In one embodiment, the plurality of layers of the elastomeric film 306 are coextruded from a suitable extrusion die.

Fig. 4 schematically illustrates an apparatus 400 for carrying out a process for forming an extrusion bonded laminate similar to that of the apparatus 100 illustrated in Fig. 1, for forming an extrusion-bonded laminate 102 including an elastomeric film directly bonded to at least one nonwoven web layer, in accordance with another embodiment of the present invention. In the embodiment illustrated in Fig. 4, where the elements are the same as those illustrated in Fig. 1, the reference numbers correspond to those of Fig. 1 but have been revised to 400, 402, etc. Thus, the embodiment of Fig. 4 is similar to the embodiment of Fig. 1, except that the apparatus 400 further includes an additional apparatus for stretching the laminate 402 in the cross-direction. In the embodiment illustrated in Fig. 4, a pair of rollers 434, 436 are arranged to activate the laminate 402 by stretching it in the cross direction, to form an activated laminate 438. The rollers 434, 436 stretch the laminate 402 in the cross direction by means of intermeshing undulations or diagonal teeth on the surface. The activation by stretching in the cross direction is an optional step. No activation is needed, for example, if the nonwoven material is elastic when laminated to the elastomeric film.

Fig. 5 is a cross-sectional view of the pair of rollers 434, 436 shown in Fig. 4, taken at line 5-5 of Fig. 4. As shown in Fig. 5, in this embodiment, the rollers 434, 436 include intermeshing undulations or teeth on the roller surfaces which impart a cross-direction stretch to the laminate 402 when the laminate passes between the rollers 434, 436. A suitable cross-direction stretching apparatus is described in U.S. Patent No. 5,865,926.

Thus, in one embodiment, the laminate is stretched in the cross direction (CD) to form a CD stretched laminate.

Although one particular embodiment of cross-direction stretching is illustrated in Figs 4 and 5, any such stretching method known in the art may be applied in suitable embodiments in which the laminate is desired to be stretched in the cross direction. Such cross-direction stretching methods are known to and may be suitably selected by those of skill in the art.

In one embodiment, the laminate includes an elastomeric film having a gauge or a thickness between 0.25 mils and 10 mils (6 µm to 250 µm). In some embodiments, the film thickness is in the range from 3 mils to 8 mils (76 µm to 203 µm), and in other embodiments, the film thickness is in the range from 4 mils to 6 mils (102 µm to 152 µm).

In one embodiment, the nonwoven web has a weight of 5 grams per square meter (g/m²) to 75 g/m², and in one embodiment from 10 g/m² to 50 g/m², and in another embodiment from 20 g/m² to 40 g/m², and in one embodiment, 30-31 g/m².

Thus, the laminate may have a total thickness approximately equal to or less than the sum of the thicknesses of the of laminated layers of the elastomeric film and the nonwoven material layers. The weights should be additive, but the thicknesses may be slightly less than additive, due to some absorption and intermingling of the elastomeric film and the nonwoven.

The nonwoven web may comprise fibers of polyethylene, polypropylene, polyesters, rayon, cellulose, nylon, and blends of such fibers. A number of definitions have been proposed for nonwoven webs. In one embodiment, the nonwoven web is a carded polypropylene, such as that available from RKW AG under the tradename PROSOFT, which is available, for example, in a weight of 31 g/m². The fibers of such nonwovens as may be used herein are usually staple fibers or continuous filaments, and are generally thermally bonded together to form the web. As used herein "nonwoven web" is used in its generic sense to define a generally planar structure that is relatively flat, flexible and porous, and is composed of staple fibers or continuous filaments, thermally bonded to form the nonwoven web. For a detailed description of nonwovens, see "Nonwoven Fabric Primer and Reference Sampler" by E. A. Vaughn, Association of the Nonwoven Fabrics Industry, 3d Edition (1992). The nonwoven materials may be carded, spun bonded, wet laid, air laid and melt blown as known in the art.

In one embodiment, although referred to as a nonwoven web, one or both of the outer "nonwoven" layers of the laminate may include a stretchable or extensible woven material, such as an elastic woven fabric. In another embodiment, the nonwoven web may include an elastic nonwoven material.

A variety of elastomeric resins may be employed in the present invention; However, the elastomeric film must comprise an SEBS block copolymer. In one embodiment, the elastomeric resin contains a vinyl arene-containing block copolymer having the general formula A-B--A' or A--B, where A and A' are each a thermoplastic polymer endblock which contains a vinyl arene moiety such as a poly (vinyl arene) where the vinyl arene may be for example styrene, and where B is an elastomeric polymer midblock such as a conjugated diene or a lower alkene polymer, such as isoprene, butadiene or ethylene-butylene or ethylene-propylene. The block copolymer may be a triblock or a diblock or, more often, a mixture of triblock and diblock copolymers. Block copolymers of the A--B--A' type can have different or the same thermoplastic block polymers for the A and A' blocks, and the present block copolymers are intended to embrace linear, branched and radial block copolymers. In this regard, the radial block copolymers may be designated (A--B)ₘ-X, wherein X is a polyfunctional atom or molecule and in which each (A--B)ₘ- radiates from X in a way that A is an endblock. In the radial block copolymer, X may be an organic or inorganic polyfunctional atom or molecule and m is an integer having the same value as the functional group originally present in X. It is usually at least 3, and is frequently 4 or 5, but not limited thereto. Tetrablock copolymers, A--B--A'--B', where A and A', and B and B', respectively, may be the same or different from each other, may also be included within the scope of the block copolymers useful in the elastomer of the present invention.

Thus, in the present invention, the expression "block copolymer", and particularly A--B--A' and A--B block copolymer, is intended to embrace all block copolymers having such rubbery blocks and thermoplastic blocks as discussed above, which can be extruded (e.g., by meltblowing and sheet forming), and without limitation as to the number of blocks. The elastomeric film may comprise any suitable poly(vinyl arene) and poly(conjugated diene) or poly(olefinic). Thus, the elastomeric film may comprise for example, elastomeric (polystyrene/poly(ethylene-butylene)/ polystyrene) (SEBS) block copolymers and/or (polystyrene/poly(butadiene)/ polystyrene) (SBS) block copolymers. Commercial examples of such elastomeric copolymers are, for example, those known as KRATON® materials, such as, for example KRATON G-1657, which are available from KRATON Polymers of Houston, Tex. KRATON® block copolymers are available in a variety of different formula numbers and grades. A compounded composition containing a suitable elastomeric copolymer is DRYFLEX® 938115, available from VTC Elastoteknik AB of Amal, Sweden. DRYFLEX® 938115 is a proprietary blend of SEBS and other polymers.

As noted, block copolymers which may be employed include thermoplastic block copolymers having linear, radial or star configurations and having the A blocks and B blocks formed into what are generally termed AB or ABA block copolymers. In one embodiment, the A block is a vinyl arene, mainly polystyrene, having a molecular weight between about 4,000 and about 50,000, and in one embodiment between about 7,000 and about 30,000. Other suitable A blocks may be formed from alpha-methyl styrene, vinyl toluene, t-butyl styrene and other ring alkylated styrenes as well as mixtures thereof. In one embodiment, the A block content is from about 5% to about 30%, and in one embodiment between about 10% and about 25% of the block copolymer.

In one embodiment, the B block is derived from a conjugated diene such as butadiene or isoprene having an average molecular weight of from about 5,000 to 500,000, and in one embodiment from 50,000 to 200,000. In one embodiment, the B block is hydrogenated following the block copolymerization.

In one embodiment, ABA triblock and AB diblock copolymers comprise the majority of the block copolymer elastomer of the elastomeric film, the percent diblock being less than 95% of the block copolymer, and in one embodiment less than 85%, and in one embodiment less than 75%. Other conventional diene elastomers may be used to a minor extent, but not so as to significantly affect the elastomeric properties.

Specific examples of ABA-type copolymers of styrene and isoprene are KRATON® 1107 and KRATON® 1117 from Kraton and styrene butadiene block synthetic rubber having a styrene content of 30% by weight (Finaprene 411) available from Fina Chemical Company.

As known in the art, the ethylene-propylene and ethylene-butylene containing block copolymers useful as the block copolymers have poly(vinyl arene) endblocks. The endblocks may comprise styrene and other vinyl arene such as alpha methyl styrene, vinyl toluene and the like. In one embodiment, the styrene ethylene-propylene block copolymer (SEPS) is KRATON® RP-6906 manufactured by Kraton Polymers and in another embodiment, the styrene ethylene-butylene block copolymer (SEBS) is KRATON® G-1657 copolymer manufactured by Kraton Polymers. Other copolymers may also be employed where the ethylene-propylene and ethylene-butylene groups serve as the midblock of the block copolymer In one embodiment, B is an elastomeric hydrogenated olefin such as ethylene-propylene or ethylene-butadiene having an average molecular weight of from 5,000 to 500,000, and in one embodiment from 50,000 to 200,000.

In one embodiment, the elastomeric film includes 65% or greater by weight of the film of the block copolymer. In another embodiment, the elastomeric film includes 70 % or greater by weight, and in another embodiment, 75% or greater by weight, of the block copolymer.

The total vinyl arene (e.g., styrene, alpha-methyl styrene, etc., obtained from both the block copolymer and from any added poly(vinylarene)) content of the elastomeric material must be less than about 30%. It has been discovered that maintaining the total vinyl arene content at about 30% or less provides an improved combination of strength and extrudability due to the presence of the vinyl arene, while providing good bonding to the nonwoven material and elasticity and/or stretchability, obtained from having a sufficient amount of the rubbery midblock in the block copolymer of the elastomeric material. If the vinyl arene content is too high, a higher modulus (stress) is obtained when tensile testing of the laminate is carried out in accordance with a method such as ASTM D882 using an Instron™ Model 5500R constant rate of extension tensile machine, as described below. If the vinyl arene content is too low, the laminate is not strong enough and the elastomeric material is more difficult to extrude.

In one embodiment, the elastomeric film further includes an additive including one or more of polystyrene, poly-(α-methyl)styrene, poly(vinyltoluene), poly(t-butylstyrene), an ethylene-vinylacetate copolymer, an ethylene-methyl(meth)acrylate copolymer, an ethylene-ethyl(meth)acrylate copolymer, an ethylene-(meth)acrylic acid copolymer added to the block copolymer as a processing aid. As will be understood by those of skill in the art, such additives are not and do not function as tackifiers, and the addition of these additives does not constitute addition of a tackifier to the elastomeric film.

In one embodiment, the additive acts as a processing aid. In one embodiment, the additive is present in a quantity sufficient to improve one or more of rheology and adhesion of the elastomeric film to the at least one nonwoven web.

The present inventors have discovered that the content of the vinyl arene(s) and, in some embodiments, other additives, in both the block copolymer and in any added vinyl arene and/or other processing aid, can affect both rheology and adhesion of the elastomeric film to the nonwoven web. Vinyl arenes include, for example, styrene and α-methylstyrene or other α-alkylstyrenes, etc. Materials produced with higher levels, for example, of vinyl arene, have been found to have good rheology but to be incompatible with some nonwoven materials. Materials having low levels, for example, of vinyl arene, have been found to have good adhesion to nonwoven materials but to have poor rheology, exhibiting undesirable characteristics such as low melt strength or surging.

In one embodiment, the additive is a poly(vinylarene), such as one or more of polystyrene and poly-α-methylstyrene, in an amount up to 5% by weight of the elastomer. In one embodiment, the amount of added polyvinyl arene is in the range from 1% to 4%, and in another embodiment, from 2% to 3% by weight of the elastomer.

In one embodiment, the additive comprises an ethylene vinylacetate copolymer in an amount up to 20% by weight of the elastomer. In one embodiment, the ethylene vinylacetate copolymer is present in an amount in the range from 5% to 15% by weight of the elastomer. In one embodiment, the ethylene vinylacetate copolymer includes a vinylacetate content in the range from 8% to 28%, and in another embodiment, from 10 to 20% by weight of the ethylene vinylacetate copolymer.

In one embodiment, the elastomeric film further includes both an ethylene vinylacetate copolymer and a poly(vinyl arene), both independently in the above-noted content ranges.

When stretched to break, the laminate does not delaminate prior to break. This feature is quite different from laminates previously known, in which at some elongation, usually from about 150% to about 250% elongation, the elastomeric film delaminates from the nonwoven web layers prior to break, with the elastomer breaking subsequent to the delamination and with a reduction in stress following the delamination. In the present invention, there is substantially no delamination on elongation prior to break.

As noted, the laminate of the present invention does not delaminate prior to break, when tested according to standard test methods. Thus, for example, when tensile testing is carried out in accordance with a method such as ASTM D882 using an Instron™ Model 5500R constant rate of extension tensile machine, the laminate stretches to break without delamination. In this test, the laminate may be tested in either the machine (extrusion) direction or the cross direction, prior to or subsequent to activation. A sample is cut from the laminate, 35 mm wide by 76 mm long, the long direction being in the cross direction of the laminate. The sample is mounted in the jaws of the test machine with an initial jaw separation of 76 mm. The jaws are separated at a rate of 51 cm/min until the break point of the sample is reached. The loads at 100% elongation and at break are recorded. After the 100% load is reached, a sample of the laminate in accordance with the present invention does not exhibit a yield point (a point where the instantaneous stress decreases with elongation), which usually occurs when the nonwoven layer(s) break in a localized area and/or where the nonwoven layers delaminate from the elastomeric film layer.

In accordance with one embodiment of the present invention, the stress observed during the foregoing tensile testing continues to increase until the sample breaks, there being no delamination and no reduction in stress prior to break.

The laminate has an elongation at break of 250% or greater, and in one embodiment 300% or greater. In one embodiment, the elongation at break is 300% or greater and the laminate substantially does not delaminate prior to break.

In one embodiment, the laminate can be stretched to 100% or greater extension, and in another embodiment, to 200% or greater extension, and in another embodiment, to 250% or greater extension, repeatedly without significant loss of tensile strength. After such stretching, in one embodiment, the laminate has recovery, i.e., returns to within an increased percentage of its original length, of 20% or less, and in another embodiment, of 10% or less, greater than its original length. This means that, following the stretching, upon relaxation, the length of a stretched sample returns to a length no more than 20% greater, or 10% greater (respectively) than its original length. Repeatedly means the material is stretched at least two to about five or more times.

In one embodiment, the elastomeric film consists essentially of a single layer. That is, in this embodiment, the elastomeric film is extruded as a single layer, and the laminate contains only the single layer of elastomeric film between and directly bonded to the two nonwoven web layers.

In other embodiments, as described above, the elastomeric film comprises a plurality of layers. In one such embodiment, the plurality of layers includes an elastomeric film (as described above) directly bonded to each nonwoven web layer, with no intervening layer of other material between each elastomeric film and the nonwoven web to which it is bonded, such as those described above with respect to Fig. 3. In one embodiment, the plurality of layers include at least one inner layer which is also a thermoplastic elastomer, but which is formed of a material different from the above-described block copolymers. In one embodiment, the at least one inner layer includes an elastic polyolefin, such as an ultra-low density elastic polypropylene or polyethylene, such as those produced by "single-site" or metallocene catalysis methods. Such polymers are commercially available from the Dow Chemical Company of Midland, Mich. under the trade name ENGAGE®, and described in U.S. Pat. Nos. 5,278,272 and 5,272,236 to Lai et al. entitled "Elastic Substantially Linear Olefin Polymers". Also useful are certain elastomeric polypropylenes such as are described, for example, in U.S. Pat. No. 5,539,056 to Yang et al. and U.S. Pat. No. 5,596,052 to Resconi et al., , and polyethylenes such as AFFINITYOR® EG 8200 from Dow Chemical of Midland, Mich. as well as EXACT® 4049, 4011 and 4041 from Exxon of Houston, Tex., as well as blends thereof.

Thus, in one embodiment of a process of making a laminate in accordance with an embodiment of this invention, the process includes extruding a single layer of elastomeric film between and in contact with at least one, and in one embodiment, two nonwoven web layers. In another embodiment, a process of making a multilayer laminate in accordance with an embodiment of this invention, the process includes extruding a multilayer elastomeric film having first and second outer layers and at least one inner layer, wherein at least the first and second outer layers are elastomeric films directly bonded to the nonwoven web layers.

In one embodiment, the elastomeric film is substantially free of a layer of poly-α-olefin. That is, in this embodiment, there is no layer of polyolefin between the elastomeric layer and the nonwoven web layer.

In one embodiment, the laminate is substantially free of fibers outwardly extending from surfaces of the laminate. That is, in one embodiment, the nonwoven web layer comprises fibers substantially in the plane of the web, and in another embodiment, the web is not treated or otherwise altered to cause fibers to extend outwardly from the web. Such treatment has sometimes been used in the art to increase the adhesion between the nonwoven web and adjacent layers, and/or to increase the loft of the fibers.

In one embodiment, the laminate of the present invention may be used in a diaper closure, as described below with respect to the embodiment of Fig. 6.

Thus, in one embodiment, described below with respect to Fig. 6, the present invention further relates to a diaper closure, including an extrusion bonded laminate having a first major face and a second major face and being extensible in at least one direction; and at least one adhesive layer applied to at least one of said first major face and said second major face, in which the extrusion bonded laminate includes an elastomeric film directly bonded to at least one nonwoven web layer substantially continuously over at least a major portion of the laminate, and in which the elastomeric film includes a vinyl arene-containing block copolymer in which the total vinyl arene content of the elastomeric film is 30% or less, and in which the elastomeric film is substantially free of a tackifying amount of a tackifier. The laminates useful in the diaper closure may be any of those which have been fully described above.

In one embodiment, the elastomeric laminate is incorporated into a diaper closure system such as the Avery Dennison™ Y9757C Wave C, which is a precombined elastic diaper tape system available from the Specialty Tape Division of Avery Dennison Corporation. An example of this system is shown in Fig. 6.

Fig. 6 is a schematic perspective view of a construction 600 such as a diaper closure, including a laminate 602 in accordance with an embodiment of the present invention. As illustrated in Fig. 6, the construction 600 includes an extrusion-bonded laminate 602 including an elastomeric layer sandwiched between a first nonwoven web layer and a second non-woven web layer. In addition to an elastic zone formed by the laminate 602, the construction 600 includes a nonwoven zone 640, a release tape 642, and an adhesive or hook element 644. The elastomeric film layer may comprise any of the elements described above, such as a single layer or a plurality of layers. In one embodiment, the diaper closure system 600 includes a finger-lift or grip 646, for use in deploying the diaper closure in use. As shown in Fig. 6, the release tape 642 may be provided with an adhesive layer 648 by which the release tape 642 may be adhered to a substrate, e.g., a diaper or other device. In one embodiment, the nonwoven zone 640 is electrostatically welded or otherwise bonded to the substrate. Similarly, the release tape 642 may be bonded to the substrate by means other than the adhesive layer 648. In the embodiment illustrated in Fig. 6, the diaper closure system is bonded or adhered securely to the substrate at two locations. As shown in Fig. 6, the nonwoven web 640 may be suitably attached to an end of the laminate 602 and to the release liner 642 by any appropriately selected attachment, as known in the art. The second end of the laminate 602 may be similarly attached to the hook or adhesive zone 644 by any appropriately selected attachment, as known in the art.

The hook or adhesive zone 644, in the embodiment illustrated in Fig. 6 comprises hook elements for, e.g., a hook-and-loop closure. In other embodiments, the zone 644 may comprise an adhesive such as a pressure-sensitive adhesive, as described below. The hook element 644 provides a high peel strength and high sheer strength when attached to a variety of loop materials such as woven brushed fabrics, lock loop fabrics and non-woven loop materials.

For the adhesive layer 648 or for an embodiment in which the zone 644 comprises an adhesive, a variety of pressure-sensitive adhesives can be utilized including hot-melt adhesives, water-based adhesives, and solvent-based adhesives. Such adhesive compositions are described in, for example, "Adhesion and Bonding", Encyclopedia of Polymer Science and Engineering, Vol. 1, pages 476-546, Interscience Publishers, 2nd Ed. 1985. Such compositions generally contain an adhesive polymer such as natural, reclaimed or styrene-butadiene rubber, styrene butadiene or styrene isoprene block copolymers, polyisobutylene, poly(vinyl ether) or poly(acrylic) ester as a major constituent. Other materials may be included in the pressure-sensitive adhesive compositions such as resin tackifiers including, for example: rosin esters, oil-soluble phenolics, or polyterpenes; antioxidants; plasticizers such as mineral oil or liquid polyisobutylenes; and fillers such as zinc oxide or hydrated alumina. A suitable antioxidant is IRGANOX® 1010 from Ciba Specialty Chemicals.

The pressure-sensitive adhesive useful in the diaper closures including the elastomeric film of the present invention may be hot-melt rubber-based materials or acrylic-based materials. Examples of hot melt adhesives include styrene-butadiene-styrene and styrene-isoprene-styrene block copolymers that may be combined with a hydrocarbon resin or resin esters as disclosed in U.S. Patent 4,080,348 to Korpman to tackify the copolymers. Other patents describing hot-melt pressure-sensitive adhesives include U.S. Patents 3,676,202, 3,723,170 and 3,787,531.

Useful acrylic pressure-sensitive adhesives are typically copolymers made by bulk polymerization in the presence of chain terminating agents. Exemplary monomers useful in forming pressure-sensitive acrylic adhesives include but are not limited to acrylic and methacrylic acids, 2-ethylhexyl acrylate, butyl acrylate, ethyl acrylate, methyl methacrylate, 2-hydroxyethyl acrylate, isooctyl acrylate, etc.

Particular examples of useful pressure-sensitive adhesives include acrylic-based emulsions such as S-490 Adhesive available from Fasson, Painesville, Ohio; a hot melt tackified Kraton-based adhesive (styrene-isoprene-styrene block copolymer) also available from Fasson under the designation S-2176 Adhesive ; and a solvent-based styrene-butadiene adhesive.

In one embodiment, the process of making the laminate further includes cutting the laminate into one or more sections having a first end and a second end. In one embodiment, as a result of activating by stretching in the cross direction, the sections are stretchable from the first end to the second end, and the stetchability is in the cross direction. In one embodiment, the sections are elastic. In one embodiment, the non-woven material is an elastic material, so that the activation by stretching in the cross direction is not needed and is not carried out. That is, in one embodiment, the cross-direction stretching renders the laminate stretchable in the cross direction, while in other embodiments, there is no step of activation by stretching in the cross direction because a stretchable or elastic nonwoven material is used.

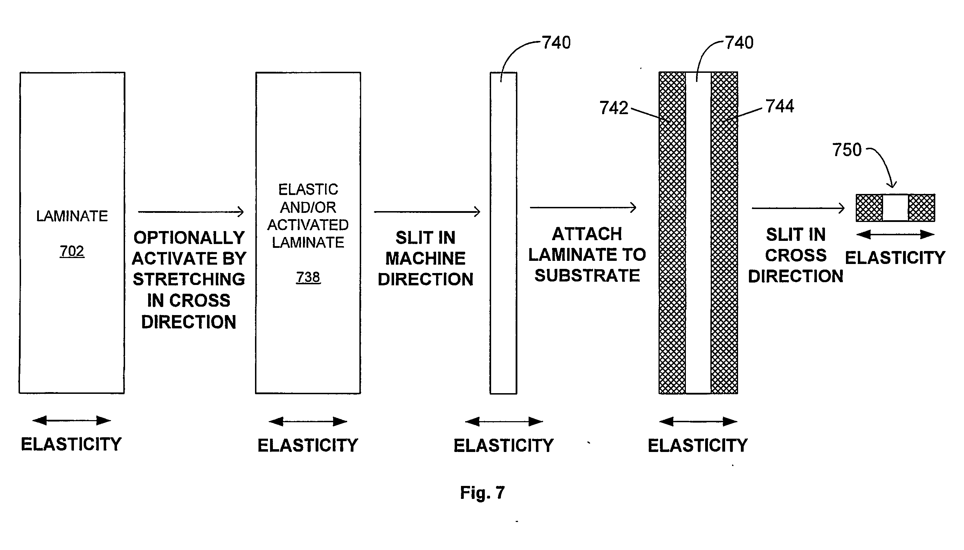

Fig. 7 is a schematic depiction of a process of making a diaper tab, in accordance with embodiments of the invention. As schematically depicted in Fig. 7, a laminate 702 may optionally be activated by stretching in the cross direction to form an activated laminate, having elasticity in the cross direction. Alternatively, the laminate 738 may already be elastic and thereby does not need to be activated by such stretching, since it already has elasticity. As shown in Fig. 7, in one embodiment, the elastic and/or activated laminate has elasticity in the cross direction. In one embodiment, the elastic and/or activated laminate 738 is formed on a relatively wide film, which may be rolled. The roll of film or the film prior to rolling may then be slit in the machine direction to form a plurality of narrower laminated films or strips 740, which in one embodiment have elasticity in the cross direction, as shown in Fig. 7. Thereafter, the narrower laminated film or strip 740 is attached to one or two suitable substrates 742 and/or 744, as known in the art for use, e.g., in making diaper tabs. As shown in Fig. 7, in one embodiment, the laminate 740 is attached to two suitable substrates 742, 744, and then is cut in the cross direction to form diaper tabs 750 having elasticity as shown in Fig. 7.

As illustrated in Fig. 7, in one embodiment, the laminate 740 is attached to a substrate 742 and 744 via one of the first end and the second end. In one embodiment, the one end attaching the laminate to the substrate is attached to a web providing the attachment, and in one such embodiment, the web providing the attachment is a nonwoven web, such as that described above with respect to the embodiment of Fig. 6.

In one embodiment, the laminate is attached to and thus forms at least one element of a diaper closure, as described above. In one embodiment, the laminate is incorporated into a diaper closure and is attached and/or adhered to a substrate which is a diaper.

### Examples

The following non-limiting examples are provided to assist in the understanding of embodiments of the present invention, not by way of limitation.

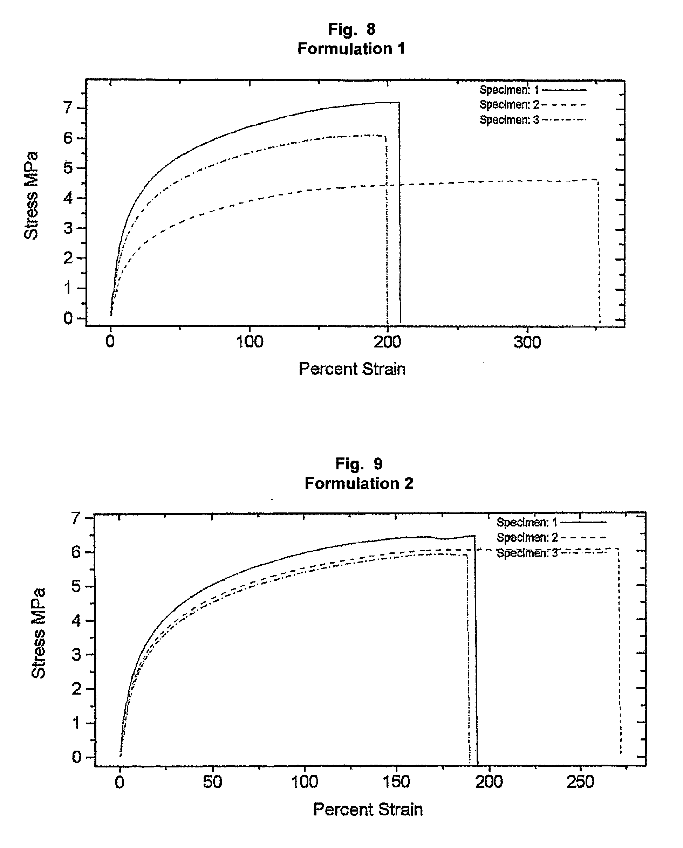

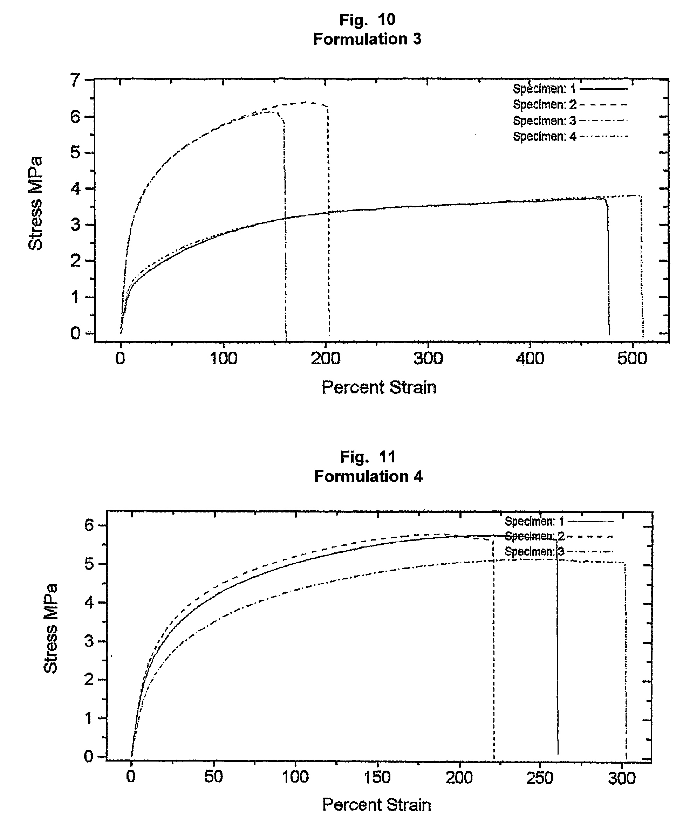

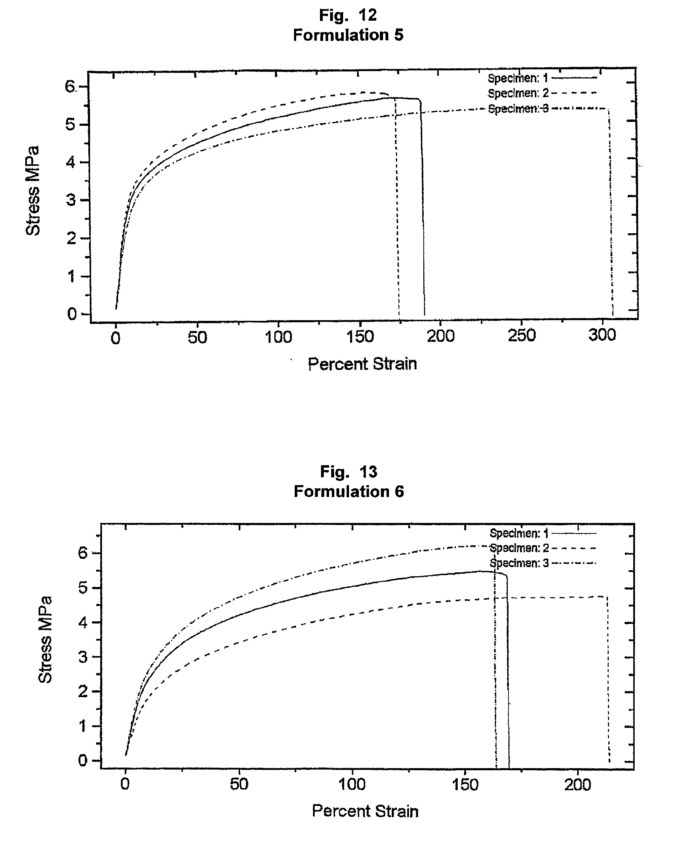

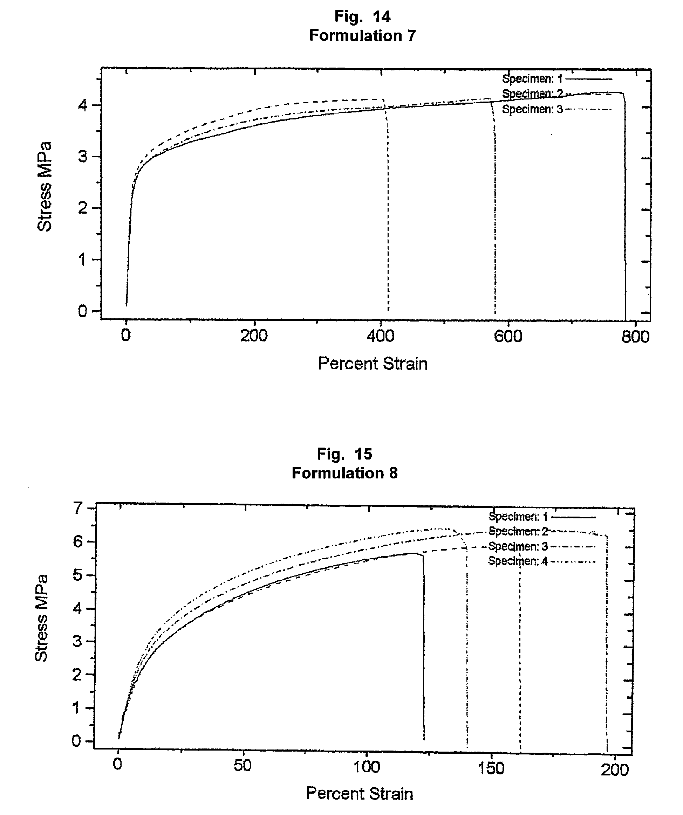

The following eight formulations are representative of embodiments of the invention. Stress/strain graphs for each of the eight formulations are shown in Figs. 8-15.

In each example, the combined ingredients are extruded through a suitable extruder at a temperature above the softening point of the mixture of ingredients, and are laminated, as shown for example, in Figs. 1 or 2, to and between two layers of non-woven material. In all of the examples presented below, except as noted, the non-woven material is a 31 g/m² carded polypropylene nonwoven web commercially available under the tradename PROSOFT from RKW AG Rheinische Kunststoffwerke, Worms, Germany. It is noted that while this nonwoven material is used here, it is only exemplary and the invention is not to be limited to any particular nonwoven material, other than as described herein. For example, nonwoven materials having different weights and formed of different materials known in the art, may be used. In the following, the quantities shown are parts per hundred or percent by weight (wt%).

### Ingredients compounding.

For formulations 1-7, the KRATON® G1650 supplied in powder form is first added into a grinder to break apart chunks of any associated powders into their original particles. The pellets of STYRON® 695 and ELVAX® 460 are then blended into the KRATON® G1650 material to form a uniform mixture, and finally, the process oil is added into the mixture. The thus obtained compound is conditioned (oil-soaking) for at least 3-hours before being processed into film with an extruder.

### Extrusion of the Elastomeric Film:

In one embodiment, the compound formed such as above (e.g., Formulations 1-7), or in one embodiment, obtained from a commercial source (e.g., Formulation 8), is processed into film by extruding it at a temperature greater than its melting or softening point, by methods known in the art. The compounded formulations are processed into films with a typical extruder and die setup suitable for processing SBS and/or SEBS materials in general. In one embodiment, a single screw extruder with general purpose screw and coat hanger type symmetrical extrusion die with relative long "land" may be used. In one embodiment, the melt temperature is in the range from 380°F to 410°F (193°C to 210°C), depending on the melt viscosity of the particular compound. In one embodiment, the extruder head pressure is kept above 1500 psi.

### Formulation 1 (Total styrene content 24 %)

| | |
|---|---|
| KRATON® G1650 | 80 |
| STYRON® 695 | 0 |
| ELVAX® 460 | 0 |
| Process Oil | 20 |

### Formulation 2 (Total styrene content 31 %), not according to the invention

| | |
|---|---|
| KRATON® G1650 | 70 |
| STYRON® 695 | 10 |
| ELVAX® 460 | 2 |
| Process Oil | 20 |

### Formulation 3 (Total styrene content 38 %), not according to the invention

| | |
|---|---|
| KRATON® G1650 | 60 |
| STYRON® 695 | 20 |
| ELVAX® 460 | 0 |
| Process Oil | 20 |

### Formulation 4 (Total styrene content 24.5 %)

| | |
|---|---|
| KRATON® G1650 | 65 |
| STYRON® 695 | 5 |
| ELVAX® 460 | 10 |
| Process Oil | 20 |

### Formulation 5 (Total styrene content 35 %), not according to the invention

| | |
|---|---|
| KRATON® G1650 | 50 |
| STYRON® 695 | 20 |
| ELVAX® 460 | 10 |
| Process Oil | 20 |

### Formulation 6 (Total styrene content 18 %)

| | |
|---|---|
| KRATON® G1650 | 60 |
| STYRON® 695 | 0 |
| ELVAX® 460 | 20 |
| Process Oil | 20 |

### Formulation 7 (Total styrene content 35.5 %), not according to the invention

| | |
|---|---|
| KRATON® G1650 | 35 |
| STYRON® 695 | 25 |
| ELVAX® 460 | 20 |
| Process Oil | 20 |

### Formulation 8

| | |
|---|---|
| DRYFLEX® 938112 | 100% |

In the foregoing examples, KRATON® G1650 is a 100% triblock SEBS and 30% styrene material available from Kraton Polymers; STYRON® 695 is a polystyrene with a substantially 100% content, available from Dow Chemical Co.; ELVAX® 460 is an ethylene-vinyl acetate copolymer available from E.I. du Pont de Nemours and Co., Inc.; and the process oil is PARALUX® 6001 R, a paraffin oil available from Chevron-Texaco. DRYFLEX® 938112 is a proprietary SEBS-based compounded thermoplastic elastomer product available from VTC Elastoteknik AB.

Each of the Formulations 1-8 are extruded between two layers of the nonwoven material described above, and each of the laminates have overall thicknesses ranging from 0.25 to 0.65 mm. When the Formulations 1-8 are tested in an Instron™ Model 5500R results such as shown in Figs. 8-15 are obtained. The specimens (S1-S3 or -S4) noted in each of the graphs in Figs. 8-15 for each of the respective formulations 1-8 have the following thicknesses, in mm:

| Formulation | S1 | S2 | S3 | S4 |
|---|---|---|---|---|
| #1 | 0.3 | 0.4 | 0.35 | |
| #2 | 0.34 | 0.34 | 0.375 | |
| #3 | 0.3875 | 0.3 | 0.29 | 0.4 |
| #4 | 0.41 | 0.405 | 0.405 | |
| #5 | 0.39 | 0.3875 | 0.46 | |
| #6 | 0.3625 | 0.3625 | 0.31 | |
| #7 | 0.625 | 0.59 | 0.575 | |
| #8 | 0.26 | 0.26 | 0.26 | |

As shown in the graphs in Figs. 8-15, during the tensile testing there is no drop or decrease in force as a function of elongation prior to break. This is considered to indicate that the bonding is good between the elastomeric film and the nonwoven layers laminated to the elastomeric web. If bonding is not good, during the elongation, the nonwoven material delaminates from the elastomeric film and breaks, resulting in a drop in force as a function of elongation prior to the break.

In another group of examples, a nonwoven layer or layers was laminated to an elastomeric web made with the commercially available materials listed in the "Product" column of the following table. DRYFLEX® 938112 is identified above. THERMOLAST K® HTD8758/04 is a proprietary compounded SBS elastomeric material available from Kraiburg TPE. KRATON® G2832 is a proprietary compounded SEBS elastomeric material available from Kraton Polymers. When stress/strain tested with the same method as described above, the results shown in the table are obtained for these laminates.

| **Product** | **Nature** | **Nonwoven** | **Tensile Strength (N/35mm)** | **Elongation at break (%)** | **Nonwoven Delamination** |
|---|---|---|---|---|---|
| DRYFLEX® 938112 | SEBS | 1 x 20g/m² | 27.02 | 778 | no |
| DRYFLEX® 938112 | SEBS | 1 x 31g/m² | 31.57 | 279 | no |
| DRYFLEX® 938112 | SEBS | 2 x 31g/m² | 51.67 | 232 | no |
| THERMOLAST K® HTD8758/04 | SBS | 1 x 31g/m² | 30.06 | 316 | Yes |
| KRATON® G2832 | SEBS | 1 x 31g/m² | 47.91 | 246 | no |
| KRATON® G2832 | SEBS | 2 x 31g/m² | 55.8 | 223 | no |

In another set of examples in accordance with another embodiment of the present invention, the elastomeric film material having a weight of 120g/m² was laminated to a single layer of nonwoven material having a weight of 31g/m² to form an extrusion bonded laminate. When stress/strain tested with the same method as described above, the results shown in the table are obtained for these laminates.

| Film | Force at delamination (N/35mm) | Elongation at delamination (%) | Force at break (N/35mm) | Elongation at break (%) |
|---|---|---|---|---|
| DRYFLEX® AD4 (SBS) | 14 | 232 | 18 | 1376 |
| DRYFLEX® AD5 (SBS) | 15.4 | 237 | 22.4 | 1244 |
| DRYFLEX® AD6 (SBS) | 16.8 | 354 | 22.4 | 1179 |

The DRYFLEX® AD4, AD5 and AD6 used in these examples are proprietary compounded SBS formulations from VTC Elastoteknik AB.

In another set of examples, the following laminates, each a trilaminate including two layers of nonwoven material laminated to the sides of an elastomeric layer, are prepared by the process described above and are laminated to nonwoven material. When tested as above, the following tensile strength and elongation at break values are obtained.

| DRYFLEX@ 938115 + 2 x 31gsm nonwoven | |
|---|---|
| Tensile strength: | 48.2N/35mm |
| Elongation at break: | 1232% |

| DRYFLEX® AD23 + 2 x 31 gsm nonwoven | |
|---|---|
| Tensile strength: | 50.9N/35mm |
| Elongation at break: | 1178% |

| DRYFLEX® AD24 + 2 x 31 gsm nonwoven | |
|---|---|
| Tensile strength: | 58.8N/35mm |
| Elongation at break: | 1270% |

The DRYFLEX® 938115, AD23 and AD24 used in these examples are proprietary compounded SEBS formulations from VTC Elastoteknik AB.

## Claims

1. An extrusion bonded laminate (102, 202, 302, 402, 602, 702) comprising an elastomeric film (106, 206, 306) directly bonded to at least one nonwoven web layer (114, 214, 314, 414) substantially continuously over at least a major portion of the laminate,
wherein the laminate is extensible in at least one direction, has an elongation at break of 250% or greater and does not delaminate prior to break, and
wherein the elastomeric film comprises an SEBS block copolymer, and wherein the elastomeric film is substantially free of a tackifying amount of a tackifier,
wherein the total vinyl arene content of the elastomeric film is 30% or less.

2. The extrusion bonded laminate of claim 1 wherein the elastomeric film comprises 65% or greater by weight of the film of the block copolymer.

3. The extrusion bonded laminate of claim 1 wherein the elastomeric film further comprises an additive comprising one or more of polystyrene, poly-(α-methyl)styrene, an ethylene-vinylacetate copolymer, an ethylene-methyl(meth)acrylate copolymer, an ethylene-ethyl(meth)acrylate copolymer, an ethylene-(meth)acrylic acid copolymer.

4. The extrusion bonded laminate of claim 3 wherein the additive is present in a quantity sufficient to improve one or more of rheology and adhesion of the elastomeric film to the at least one nonwoven web.

5. The extrusion bonded laminate of claim 1 wherein the elastomeric film further comprises one or more of polystyrene and poly-(α-methyl)styrene in an amount up to 5% by weight of the elastomer.

6. The extrusion bonded laminate of claim 1 wherein the elastomeric film further comprises an ethylene vinylacetate copolymer in an amount up to 20% by weight of the elastomer.

7. The extrusion bonded laminate of claim 1 wherein the at least one nonwoven web comprises two nonwoven webs(114, 214, 314, 414, 118, 218, 318, 418).

8. The extrusion bonded laminate of claim 1 wherein the at least one nonwoven web is elastic.

9. A diaper closure (600) comprising the extrusion bonded laminate of claim 1.

10. A process for producing an extrusion-bonded laminate extensible in at least one direction as defined in any one of the preceding claims 1 to 8, comprising:
forming a laminate by extrusion bonding an elastomeric film directly to at least one nonwoven web,
wherein the elastomeric film is directly bonded to the nonwoven webs substantially continuously over at least a major portion of the laminate, and
wherein the elastomeric film comprises an SEBS block copolymer, and wherein the elastomeric film is substantially free of a tackifying amount of a tackifier, and
wherein the laminate has an elongation at break of 250% or greater, and does not delaminate prior to break.

11. The process according to claim 10 further comprising activating the laminate by stretching the laminate in the cross direction.

12. The process according to claim 11 wherein the stretching is carried out by passing the laminate between intermeshing rollers.

13. The process according to claim 11 further comprising cutting the laminate into sections having a first end and a second end, wherein the sections are stretchable from the first end to the second end, and the stetchability is in the cross direction.

14. The process according to claim 13 further comprising attaching the laminate to a substrate via one of the first end and the second end.

15. The process according to claim 14 wherein the one end attaching the laminate to the substrate is attached to a web providing the attachment.

16. The process according to claim 15 wherein the web providing the attachment is a nonwoven web.

17. The process according to claim 10 wherein the laminate is attached to at least one element of a diaper closure.

18. The process according to claim 10 wherein the extrusion bonding comprises extruding a single layer of elastomeric film.

19. The process according to claim 10 wherein the extrusion bonding comprises extruding a multilayer elastomeric film having first and second outer layers and at least one inner layer, wherein at least the first and second outer layers are the elastomeric films.

20. The process according to claim 10 wherein the at least one nonwoven web is elastic.

## Patentansprüche

1. Extrusionsgebundenes Laminat (102, 202, 302, 402, 602, 702), umfassend eine elastomere Folie (106, 206, 306), direkt gebunden an mindestens eine Textilverbundstoff- bzw. Vliesstoffbahnschicht (114, 214, 314, 414) im wesentlichen kontinuierlich über mindestens einen Hauptabschnitt des Laminats,
wobei das Laminat in mindestens eine Richtung streckbar bzw. dehnbar ist, eine Dehnung bei Bruch von 250% oder größer aufweist und nicht vor dem Bruch delaminiert, und
wobei die elastomere Folie ein SEBS Blockcopolymer umfaßt, und wobei die elastomere Folie im wesentlichen frei von einer klebrig machenden Menge eines Klebrigmachers ist, wobei der Gesamtvinylarengehalt der elastomeren Folie 30% oder weniger ist.

2. Extrusionsgebundenes Laminat gemäß Anspruch 1, wobei die elastomere Folie 65 Gew.-% oder mehr der Folie des Blockcopolymers umfaßt.

3. Extrusionsgebundenes Laminat gemäß Anspruch 1, wobei die elastomere Folie weiter ein Additiv, umfassend ein oder mehrere von Polystyrol, Poly-(α-methyl)styrol, einem Ethylen-Vinylacetatcopolymer, einem Ethylen-Methyl(meth)acrylat-Copolymer, einem Ethylen-Ethyl(meth)acrylat-Copolymer, einem Ethylen-(Meth)acrylsäure-Copolymer, umfasst.

4. Extrusionsgebundenes Laminat gemäß Anspruch 3, wobei das Additiv in einer Menge vorliegt, die ausreichend ist, eines oder mehrere von Rheologie und Adhäsion der elastomeren Folie an die mindestens eine Textilverbundstoffbahn zu verbessern.

5. Extrusionsgebundenes Laminat gemäß Anspruch 1, wobei die elastomere Folie weiter eines oder mehrere von Polystyrol oder Poly-(α-methyl)styrol in einer Menge von bis zu 5 Gew.-% des Elastomers umfaßt.

6. Extrusionsgebundenes Laminat gemäß Anspruch 1, wobei die elastomere Folie weiter ein Ethylenvinylacetatcopolymer in einer Menge von bis zu 20 Gew.-% des Elastomers umfaßt.

7. Extrusionsgebundenes Laminat gemäß Anspruch 1, wobei die mindestens eine Textilverbundstoffbahn zwei Textilverbundstoffbahnen (114, 214, 314, 414, 118, 218, 318, 418) umfaßt.

8. Extrusionsgebundenes Laminat gemäß Anspruch 1, wobei die mindestens eine Textilverbundstoffbahn elastisch ist.

9. Windelverschluß (600), umfassend das extrusionsgebundene Laminat gemäß Anspruch 1.

10. Verfahren zur Herstellung eines extrusionsgebundenen Laminats, dehnbar in mindestens eine Richtung, wie in einem der vorhergehenden Ansprüche 1 bis 8 definiert, umfassend
das Bilden eines Laminats durch Extrusionsbinden einer elastomeren Folie direkt auf mindestens einer Textilverbundstoffbahn,
wobei die elastomere Folie direkt auf die Textilverbundstoffbahnen im wesentlichen kontinuierlich über mindestens einen Hauptabschnitt des Laminats gebunden wird, und
wobei die elastomere Folie ein SEBS Blockcopolymer umfaßt und wobei die elastomere Folie im wesentlichen frei von einer klebrigmachenden Menge eines Klebrigmachers ist, und
wobei das Laminat eine Dehnung bei Bruch von 250% oder höher aufweist und nicht vor dem Bruch delaminiert.

11. Verfahren gemäß Anspruch 10, weiter umfassend das Aktivieren des Laminats durch Strecken des Laminats in die Querrichtung.

12. Verfahren gemäß Anspruch 11, wobei das Strecken durch Leiten des Laminats zwischen ineinandergreifende Walzen durchgeführt wird.

13. Verfahren gemäß Anspruch 11, weiter umfassend das Schneiden des Laminats in Abschnitte mit einem ersten Ende und einem zweiten Ende, wobei die Abschnitte von dem ersten Ende bis zu dem zweiten Ende streckbar sind und die Streckbarkeit in der Querrichtung ist.

14. Verfahren gemäß Anspruch 13, weiter umfassend das Anhaften des Laminats an ein Substrat über eines von dem ersten Ende und dem zweiten Ende.

15. Verfahren gemäß Anspruch 14, wobei das eine Ende, welches das Laminat an das Substrat anhaftet, an eine Bahn, welche die Anheftung bereitstellt, angeheftet wird.

16. Verfahren gemäß Anspruch 15, wobei die Bahn, welche die Anbindung bereitstellt, eine Textilverbundstoffbahn ist.

17. Verfahren gemäß Anspruch 10, wobei das Laminat an mindestens ein Element eines Windelverschlusses angeheftet wird.

18. Verfahren gemäß Anspruch 10, wobei das Extrusionsbinden das Extrudieren einer Einzelschicht der elastomeren Folie umfaßt.

19. Verfahren gemäß Anspruch 10, wobei das Extrusionsbinden das Extrudieren einer mehrschichtigen elastomeren Folie mit einer ersten und zweiten äußeren Schicht und mindestens einer inneren Schicht umfaßt, wobei mindestens die erste und die zweite äußere Schicht die elastomeren Folien sind.

20. Verfahren gemäß Anspruch 10, wobei die mindestens eine Textilverbundstoffbahn elastisch ist.

## Revendications

1. Stratifié lié par extrusion (102, 202, 302, 402, 602, 702), comprenant un film élastomère (106, 206, 306) lié directement à au moins une couche de voile non tissé (114, 214, 314, 414), de manière sensiblement continue sur au moins une majeure partie du stratifié,
où le stratifié est extensible dans au moins une direction, a un allongement à la rupture de 250% ou plus et ne se déstratifie pas avant la rupture, et
où le film élastomère comprend un copolymère séquencé SEBS, et où le film élastomère est sensiblement exempt d'une quantité donnant du collant d'un agent d'adhésivité,
où la teneur totale en vinylarène du film élastomère est de 30% ou moins.

2. Stratifié lié par extrusion selon la revendication 1, où le film élastomère comprend 65% en poids de film, ou plus, du copolymère séquencé.

3. Stratifié lié par extrusion selon la revendication 1, où le film élastomère comprend en outre, un additif comprenant un ou plusieurs parmi un polystyrène, un poly(α-méthylstyrène), un copolymère éthylène-acétate de vinyle, un copolymère éthylène-(méth)acrylate de méthyle, un copolymère éthylène-(méth)acrylate d'éthyle, un copolymère éthylène-acide (méth)acrylique.

4. Stratifié lié par extrusion selon la revendication 3, où l'additif est présent en une quantité suffisante pour améliorer l'un ou plusieurs parmi la rhéologie et l'adhésion du film élastomère sur le au moins un voile non tissé.

5. Stratifié lié par extrusion selon la revendication 1, où le film élastomère comprend en outre, un ou plusieurs parmi un polystyrène et un poly(α-méthylstyrène), en une quantité allant jusqu'à 5% en poids de l'élastomère.

6. Stratifié lié par extrusion selon la revendication 1, où le film élastomère comprend en outre, un copolymère éthylène-acétate de vinyle, en une quantité allant jusqu'à 20% en poids de l'élastomère.

7. Stratifié lié par extrusion selon la revendication 1, où le au moins un voile non tissé comprend deux voiles non tissés (114, 214, 314, 414, 118, 218, 318, 418).

8. Stratifié lié par extrusion selon la revendication 1, où le au moins un voile non tissé est élastique.

9. Attache de lange (600) comprenant le stratifié lié par extrusion selon la revendication 1.

10. Procédé de production d'un stratifié lié par extrusion, extensible dans au moins une direction, tel que défini dans l'une quelconque des revendications précédentes 1 à 8, comprenant :
la formation d'un stratifié par liaison par extrusion d'un film élastomère, directement sur au moins un voile non tissé,
où le film élastomère est directement lié aux voiles non tissés de manière sensiblement continue sur au moins la majeure partie du stratifié,
où le film élastomère comprend un copolymère séquencé SEBS, où le film élastomère est sensiblement exempt d'une quantité donnant du collant d'un agent d'adhésivité, et
où le film élastomère présente un allongement à la rupture de 250% ou plus et ne se déstratifie pas avant la rupture.

11. Procédé selon la revendication 10, comprenant en outre, l'activation du stratifié par étirage du stratifié en direction transversale.

12. Procédé selon la revendication 11, où l'étirage est réalisé en faisant passer le stratifié entre des cylindres à engrènement.

13. Procédé selon la revendication 11, comprenant en outre, la découpe du stratifié en sections ayant une première extrémité et une deuxième extrémité, où les sections peuvent être étirées de la première extrémité à la deuxième extrémité, l'extensibilité étant en direction transversale.

14. Procédé selon la revendication 13, comprenant en outre, la fixation du stratifié à un substrat via l'une des première et deuxième extrémités.

15. Procédé selon la revendication 14, où l'extrémité de fixation du stratifié au substrat, est fixée à un voile procurant la fixation.

16. Procédé selon la revendication 15, où le voile procurant la fixation est un voile non tissé.

17. Procédé selon la revendication 10, où le stratifié est fixé à au moins un élément d'une attache de lange.

18. Procédé selon la revendication 10, où la liaison par extrusion comprend l'extrusion d'une seule couche de film élastomère.

19. Procédé selon la revendication 10, où la liaison par extrusion comprend l'extrusion d'un film élastomère multicouche, ayant une première et une deuxième couche extérieure et au moins une couche interne, où au moins les première et deuxième couches extérieures sont les films élastomères.

20. Procédé selon la revendication 10, où le au moins un voile non tissé est élastique.
